# EUROPEAN PATENT SPECIFICATION

(11) **EP 2 864 418 B1**
(45) Date of publication and mention of the grant of the patent: **16.08.2017**
(21) Application number: 12879631.5
(22) Date of filing: 26.06.2012
(51) Int. Cl.: C08L 63/02, C08G 59/26, C08K 3/40

(54) **INSULATING COMPOSITES FOR POWER TRANSMISSION AND DISTRIBUTION**
ISOLIERENDE VERBUNDWERKSTOFFE ZUR ENERGIEÜBERTRAGUNG UND -VERTEILUNG
COMPOSITES ISOLANTS POUR LE TRANSPORT ET LA DISTRIBUTION D'ÉNERGIE

(43) Date of publication of application: 29.04.2015
(73) Proprietor: Dow Global Technologies LLC, Midland, MI 48674 (US)
(72) Inventor: LI, Yongjiang, Shanghai 201100 (CN); DU, Wei, Shanghai 201100 (CN); ZHANG, Yi, Shanghai 200042 (CN)
(74) Representative: Beck Greener
(86) International application number: PCT/CN2012/077535
(87) International publication number: WO 2014/000158

(56) References cited:
- WO-A1-2011/037239
- CN-A- 1 251 597
- JP-A- 2004 331 748
- JP-A- 2009 079 073
- US-A1- 2012 095 132

## Description

### FIELD

The present application relates to an insulating composite for power transmission and distribution, in particularly, high-voltage transmission lines. The insulating composite comprises a continuous reinforcing fiber embedded in a cured epoxy resin composition. The present application also relates to a process for preparing the insulating composite and an insulator comprising the insulating composite as a core.

### BACKGROUND

Epoxy compositions are widely used in electrical applications including for example electrical insulating systems, in particular, composite insulators for medium voltage to high-voltage (a nominal voltage greater than 10,000 volts (V) to 1,100,000 V) overhead lines and post insulators. A composite insulator typically comprises an elongated insulating core for load-bearing made of fiber reinforced epoxy compositions. The length of the insulating core is covered with a polymeric outer shed (defining convolutions to increase the creepage distance between metal fittings), for example, silicone rubber.

The insulating core for composite insulators needs to meet certain properties including dye-penetration resistance, high direct current (D.C.) breakdown strength, and high flexural strength at 25 degree C (°C). Among these, a key property for the reliability of an insulating core is the high D.C. breakdown voltage (at least 50 kilovolts (kV) or higher in accordance with DL/T 810-2002 standard).

A typical process for manufacturing composite insulators may include, firstly preparing an insulating core by pultrusion, injecting rubber to cover the insulating core in a mold, followed by vulcanizing the silicon rubber at a temperature ranging from 120°C to 170°C for a certain time period, then demolding. To save energy and avoid turn-around time (thus increase productivity), demolding is usually conducted at a temperature close to the vulcanization temperature.

However, high-temperature demolding may cause deformation of insulating cores. In particular, in the situation of high-voltage overhead lines applications, long (that is, at least one meter in length) insulating cores are usually desired to provide enough distance for satisfactory insulating properties. At the same time, a small diameter (that is, 40 millimeters or less) is also desired to keep the overall weight as low as possible. Such long and small-diameter insulating cores are very easy to deform, or even break, when being demolded at high temperature. Thus, the insulating core requires satisfactory flexural strength even at high temperature (that is, hot flexural strength at 150°C of 300 Megapascals (MPa) or more as measured by ASTM-D 638-91) to avoid deformation or breakage.

An incumbent insulating core for composite insulators only comprises a bisphenol-A based epoxy resin. The insulating core shows acceptable D. C. breakdown voltage and dye penetration performance, however, its flexural strength at 150°C is undesirably less than 300 MPa. To improve the hot flexural strength of the insulating core, one approach is to blend a phenol novolac epoxy resin with the bisphenol A-type epoxy resin. The obtained insulating core may achieve a desirable hot flexural strength, but fails to have acceptable D.C. breakdown voltage and dye penetration performance.

In addition, insulating cores for composite insulators are generally prepared by pultrusion, which requires using an epoxy composition that has a viscosity of 6,000 Millipascals. Second (mPa.s) or less at 25°C to afford satisfactory processability of pultrusion.

It would be an advance in the art to provide an insulating composite that exhibits a desired hot flexural strength at 150°C, at the same time achieves required D.C. breakdown voltage and dye penetration performance, and allowable for using existing pultrusion line.

### BRIEF SUMMARY

The present invention solves the problems of prior art insulating cores by providing an insulating composite that exhibits a hot flexural strength of at least 300 MPa at 150° C, a D.C. breakdown voltage of at least 50 kV, that passes a dye penetration test at least 15 minutes, and that is capable of being prepared by pultrusion.

The invention provides an insulating composite comprising a continuous reinforcing fiber embedded in a thermoset matrix, the thermoset being a reaction product of a curable epoxy resin composition. The curable epoxy resin composition comprises a combination of (a) at least one bisphenol A-type epoxy resin, (b) at least one oxazolidone ring containing epoxy resin, and (c) at least one anhydride hardener; and the curable epoxy resin composition has a viscosity of 6,000 mPa.s or less at 25°C (ASTM D-2983), which provides the composition with satisfactory pultrusion processability. The curable epoxy resin composition upon curing provides the insulating composite with a balance of high hot flexural strength at 150°C, high D.C. breakdown voltage and desired dye-penetration performance. Surprisingly, the insulating composite of this invention has a hot flexural strength at 150°C of 300MPa or higher as measured by ASTM-D 638-91, while a D.C. breakdown voltage of 50 kV or higher in accordance with DL/T 810-2002 and passes dye penetration test at least 15 minutes in accordance with DL/T 810-2002.

In a first aspect, the invention is an insulating composite for power transmission and distribution comprising a continuous reinforcing fiber embedded in a thermoset resin, wherein the thermoset resin is a reaction product of a curable epoxy resin composition comprising (a) at least one bisphenol-A type epoxy resin, (b) at least one oxazolidone ring containing epoxy resin, and (c) at least one anhydride hardener and wherein the curable epoxy resin composition has a viscosity of 6,000 mPa.s or less at 25°C.

In a second aspect, the invention is a pultrusion process for preparing the insulating composite of the first aspect, comprising pulling a continuous reinforcing fiber, contacting the reinforcing fiber with a curable epoxy resin composition and curing the curable epoxy resin composition, wherein the curable epoxy resin composition has a viscosity of 6000 mPa.s or less at 25°C and contains (a) at least one bisphenol A-type epoxy resin, (b) at least one oxazolidone ring containing epoxy resin, and (c) at least one anhydride hardener.

### DESCRIPTION

Test methods refer to the most recent test method as of the priority date of this document when a date is not indicated with the test method number. References to test methods contain both a reference to the testing society and the test method number. The following test method abbreviations and identifiers apply herein: ASTM refers to American Society for Testing and Materials; and ISO refers to International Organization for Standards, IEC refers to International Electrotechnical Commission and DL refers to Dian Li.

"And/or" means "and, or as an alternative". All ranges include endpoints unless otherwise indicated.

The curable epoxy resin composition comprises at least one or more bisphenol A-type epoxy resin. The bisphenol A-type epoxy resin useful in this invention may include for example a diglycidyl ether of 4,4'-dihydroxydiphenyl dimethyl methane (or bisphenol A) and derivatives thereof, and diglycidyl ether of bromobisphenol A (2,2-bis(4-(2,3-epoxypropoxy)3-bromophenyl) propane) and derivatives thereof, and mixtures thereof For example, oligomeric and polymeric diglycidyl ether of bisphenol A, oligomeric and polymeric diglycidyl ether of tetrabromobisphenol A, oligomeric and polymeric diglycidyl ether of bisphenol A and tetrabromobisphenol A and mixtures thereof may be used in this invention. Suitable commercially available bisphenol A-type epoxy resins useful in this invention include for example D.E.R.™ 332, D.E.R. 383, D.E.R. 542 and D.E.R. 331 (D.E.R. is a trademark of The Dow Chemical Company) available from The Dow Chemical Company, and mixtures thereof. As an illustration of the present invention, the bisphenol A-type epoxy resin may be a liquid epoxy resin, D.E.R. 383 (diglycidyl ether of bisphenol A) having an epoxide equivalent weight of 175-185, a viscosity of 9.5 Pa-s at 25°C and a density of 1.16 g/cc.

The bisphenol A-type epoxy resin useful in this invention can have an epoxide equivalent weight (EEW) of 600 or less, 400 or less, and even 200 or less. At the same time, the bisphenol A-type epoxy resin can have an EEW of 170 or more, 180 or more, or even 185 or more.

The amount of the bisphenol A-type epoxy resin in the curable epoxy resin composition can be 60 weight-percent (wt %) or more, 65 wt % or more, or even 70 wt % or more, based on the total weight of epoxy resins in the curable epoxy resin composition. At the same time, the amount of the bisphenol A-type epoxy resin in the curable epoxy resin composition can be 95 wt % or less, 90 wt % or less, or even 85 wt % or less, based on the total weight of epoxy resins in the curable epoxy resin composition.

The oxazolidone ring containing epoxy resin useful in this invention may comprise an epoxy resin having a structure of the following Formula (I): 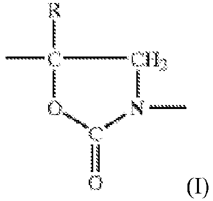 where R is hydrogen or a methyl group.

The oxazolidone ring containing epoxy resin used herein may comprise a reaction product of at least one epoxy resin and at least one isocyanate compound.

The epoxy resin to prepare the oxazolidone ring containing epoxy resin may comprise an aliphatic epoxy resin, an aromatic epoxy resin, or combination of an aliphatic epoxy resin and an aromatic epoxy resin.

Examples of the aliphatic epoxy resins used to prepare the oxazolidone ring containing epoxy resin include polyglycidyl ethers of aliphatic polyols or alkylene-oxide adducts thereof, polyglycidyl esters of aliphatic long-chain polybasic acids, homopolymers synthesized by vinyl-polymerizing glycidyl acrylate or glycidyl methacrylate, and copolymers synthesized by vinyl-polymerizing glycidyl acrylate or glycidyl methacrylate and other vinyl monomers, and mixtures thereof. Some particular examples of the aliphatic epoxy resins useful in this invention include, glycidyl ethers of polyols such as 1,4-butanediol diglycidyl ether; 1,6-hexanediol diglycidyl ether; a triglycidyl ether of glycerin; a triglycidyl ether of trimethylol propane; a tetraglycidyl ether of sorbitol; a hexaglycidyl ether of dipentaerythritol; a diglycidyl ether of polyethylene glycol or a diglycidyl ether of polypropylene glycol; polyglycidyl ethers of polyether polyols obtained by adding one type, or two or more types, of alkylene oxide to aliphatic polyols such as propylene glycol, trimethylol propane, and glycerin; diglycidyl esters of aliphatic long-chain dibasic acids, and mixtures thereof. A combination of aliphatic epoxy resins may be used in this invention.

Examples of the aromatic epoxy resins used to prepare the oxazolidone ring containing epoxy resin include diglycidyl ether of polyphenols such as hydroquinone; resorcinol; bisphenol A; bisphenol F; 4,4'-dihydroxybiphenyl; novolac; tetrabromobisphenol A; 2,2-bis(4-hydroxyphenyl)-1,1,1,3,3,3-hexafluoropropane; 1,6- dihydroxynaphthalene; and mixtures thereof. A combination of aromatic epoxy resins may be used in this invention.

The isocyanate compound used to prepare the oxazolidone ring containing epoxy resins may be aromatic, aliphatic, cycloaliphatic, or mixtures thereof The isocyanate compound may also comprise for example, a polymeric isocyanate. The isocyanate compound may be used herein as a mixture of two or more of isocyanates. The isocyanate compound may also be any mixture of the isomers of an isocyanate, for example a mixture of the 2,4- and 2,6- isomers of diphenylmethane diisocyanate (MDI) or a mixture of any 2,2'-, 2,4'- and 4,4'- isomers of toluene diisocyanate (TDI).

The isocyanate compound useful in this invention preferably comprises a diisocyanates and/or polymeric isocyanates. Diisocyanates include for example aromatic diisocyanates and aliphatic diisocyanates. Examples of aromatic diisocyanates or polymeric isocyanates useful in this invention include 4,4'-MDI; TDI such as 2,4-toluene diisocyanate and 2,6-toluene diisocyanate; xylene diisocyanate (XDI); and isomers thereof. Examples of aliphatic diisocyanates useful in this invention include hexamethylene diisocyanate (HMDI); isophorone diisocyanate (IPDI); 4,4'-methylenebis(cyclohexylisocyanate); trimethyl hexamethylene diisocyanate; and isomers thereof. A combination of diisocyanates may be used in this invention. A combination of polymeric isocyanates may also be used in this invention. Suitable commercially available diisocyanates and polymeric isocyanates useful in this invention may include, for example ISONATE™ M124 (ISONATE is a trademark of The Dow Chemical Company), ISONATE M125, ISONATE OP 50, PAPI™ 27 (PAPI is a trademark of The Dow Chemical Company), VORONATE™ M229 (VORONATE is a trademark of The Dow Chemical Company), VORANATE T-80 isocyanates, all available from The Dow Chemical Company; and mixtures thereof.

The oxazolidone ring containing epoxy resin useful in this invention is desirably a reaction product of an aromatic epoxy resin and an isocyanate compound. Other suitable oxazolidone ring containing epoxy resins useful in this invention may include for example those disclosed in U.S. Patent No. 5,112,932; and PCT Patent Application publications WO2009/045835, WO2011/087486 and WO2011/059633.

The amount of the oxazolidone ring containing epoxy resin useful in this invention can be 5 wt % or more, 8 wt % or more, 10 wt % or more, or even 15 wt % or more. At the same time, the amount of the oxazolidone ring containing epoxy resin can be 40 wt % or less, 35 wt % or less, or even 30 wt % or less. Wt% of the oxazolidone ring containing epoxy resin is based on the total epoxy resins in the curable epoxy resin composition.

The curable epoxy resin composition also comprises at least one anhydride hardener (also referred to as a hardener or cross-linking agent), or blends thereof The anhydride hardener useful in this invention may comprise for example cycloaliphatic and/or aromatic anhydrides and mixtures thereof. Representative anhydride hardeners useful in this invention may include, for example, phthalic acid anhydride and derivatives thereof, nadic acid anhydride and derivatives thereof, trimellitic acid anhydride and derivatives thereof, pyromellitic acid anhydride and derivatives thereof, benzophenonetetracarboxylic acid anhydride and derivatives thereof, dodecenyl succinic acid anhydride and derivatives, thereof, poly(ethyloctadecanedioic acid) anhydride and derivatives thereof The above anhydride hardeners can be used alone or in an admixture thereof.

Hexahydrophthalic anhydride (HHPA); methyl hexahydrophathalic anhydride (MHHPA); tetrahydrophthalic anhydride (THPA); methyl tetrahydrophthalic anhydride (MTHPA); nardic maleic anhydride (NMA); nadic acid anhydride, methyl-(endo)-5-norbornene-2,3-dicarboxylic anhydride (METHPA); pyromellitic dianhydride; ciscyclopentanetetracarboxylic acid dianhydride; hemimellitic anhydride; trimellitic anhydride; naphthalene-1, 8-dicarboxylic acid anhydride; phthalic anhydride; dichloromaleic anhydride; dodecenylsuccinic anhydride; glutaric anhydride; maletic anhydride; succinic anhydride; methyl nadic acid anhydride; and mixtures thereof are particularly suitable for this invention. Anhydride hardeners may also include for example copolymers of styrene and maleic acid anhydrides and other anhydrides including for example those described in US Patent No. 6,613,839.

In general, the anhydride hardener useful in this invention is used in a sufficient amount to cure the curable epoxy resin composition. A molar ratio of total epoxy resins to the hardener (including the anhydride hardener and additional hardeners if present) in the epoxy resin composition can be 50:1 or lower, 20:1 or lower, 10:1 or lower, or even 5:1 or lower. At the same time, the molar ratio of the total epoxy resins to the hardener can be 1:2 or higher, 1:1.5 or higher, 1:1.25 or higher, or even 1:1 or higher.

The curable epoxy resin composition may optionally comprise a catalyst. The catalyst may be used to promote the reaction between the epoxy resins and the anhydride hardener. Catalysts useful in this invention may include for example a Lewis acid, such as boron trifluoride, or a derivative of boron trifluoride with an amine such as piperidine or methyl ethylamine. The catalysts may also be basic such as, for example, an imidazole or an amine. Other catalysts useful in this invention may include for example other metal halide Lewis acids, including stannic chloride, zinc chloride and mixtures thereof; metal carboxylate-salts such as stannous octoate; amines including tertiary amines such as triethylamine, diethyl aminopropylamine, benzyl dimethy amine, tris(dimethylaminomethyl)phenol and mixtures thereof; imidazole derivatives such as 2-methylimidazole, 1-methylimidazole, benzimidazole and mixtures thereof; and onium compounds such as ethyltriphenyl phosphonium acetate, and ethyltriphenyl phosphonium acetate-acetic acid complex; and any combination thereof. Any of the well-known catalysts described in U.S. Patent. No. 4,925,901 may also be used in this invention.

The catalysts, when present in the curable epoxy resin composition, are employed in a sufficient amount to result in accelerating the reaction between the epoxy resins and the hardener at high temperature and/or a substantially complete cure of the curable epoxy resin composition with at least some cross-linking. For example, the catalyst, when used, can be used in an amount of from 0.01 to 5 parts per hundred parts (phr) by weight of total epoxy resins in the curable epoxy resin composition, from 0.1 phr to 4.0 phr, or even from 0.2 phr to 3 phr.

The curable epoxy resin composition may optionally comprise an additional epoxy resin The additional epoxy resin (or "second epoxy") useful in this invention may be any type of epoxy resins, including any material containing one or more reactive oxirane groups, referred to herein as "epoxy groups" or "epoxy functionality". The additional epoxy resin may include for example mono-functional epoxy resins, multi- or poly-functional epoxy resins, and combinations thereof. The additional epoxy resins may be pure compounds, but are generally mixtures or compounds containing one, two or more epoxy groups per molecule. The additional epoxy resin may also be for example monomeric or polymeric. The additional epoxy resins may also include for example reactive hydroxy (-OH) groups which may react at higher temperatures with anhydrides, organic acids, amino resins, phenolic resins, or with epoxy groups (when catalyzed) to result in additional crosslinking. Other suitable epoxy resins useful in this invention are disclosed in, for example, U.S. Patent Nos. 7,163,973, 6,887,574, 6,632,893, 6,242,083, 7,037,958, 6,572,971, 6,153,719, and 5,405,688; PCT Publication WO 2006/052727; and U.S. Patent Application Publication Nos. 2006/0293172 and 2005/0171237.

Examples of the additional epoxy resins useful in this invention include bisphenol F epoxy resins, phenol novolac epoxy resins, cresol novolac epoxy resins, cycloaliphatic epoxy resins, multi-functional (polyepoxy) epoxy resins, and mixtures thereof.

The bisphenol F epoxy resin useful in this invention may include for example a diglycidyl ether of bis(4-hydroxyphenyl) methane (known as bisphenol F) and derivatives thereof, and mixtures thereof. Suitable commercially available bisphenol F epoxy resins useful in this invention may include for example D.E.R. 354 and D.E.R. 354LY, each available from The Dow Chemical Company, and mixtures thereof.

Suitable phenol novolac epoxy resins and/or cresol novolac epoxy resins optionally used in this invention may include, for example, condensates of phenols with formaldehyde that may be obtained under acid conditions, such as phenol novolac and cresol novolac, such as those available under the tradenames D.E.N. 431 and D.E.N. 438 available from The Dow Chemical Company, and EPONSU-8, available from Hexion Specialty Chemicals; and mixtures thereof.

The additional epoxy resin may comprise at least one cycloapliphatic epoxy resin. Cycloaliphatic epoxy resins, for example those described in U.S. Patent No. 3,686,359, may be used in this invention. Examples of suitable cycloaliphatic epoxy resins useful in this invention may include, diepoxides of cycloaliphatic esters of dicarboxylic acids such as bis(3,4-epoxycyclohexylmethyl)oxalate; bis(3,4-epoxycyclohexylmethyl)adipate; bis(3,4-epoxy-6-methylcyclohexylmethyl)adipate; bis(3,4-epoxycyclohexylmethyl)pimelate; vinylcyclohexene diepoxide; 3,4-epoxycyclohexylmethyl-3,4-epoxycyclohexane carboxylate; limonene diepoxide; bis[(3,4-epoxycyclohexyl)methyl]dicarboxylates; bis[(3,4-epoxy-6-methylcyclohexyl) methyl]dicarboxylates; glycidyl 2,3-epoxycyclopentyl ether; cyclopentenyl ether diepoxide; 2,3-epoxycyclopentyl-9,10-epoxystearate; 4,5-epoxytetrahydrophthalic acid diglycidyl ester; bis(2,3-epoxycyclopentyl)ether; 2-(3 ,4-epoxycyclohexyl)-5,5-spiro(2,3-epoxycyclohexane)-m-dioxane; 2-(3,4-epoxycyclohexyl)-5,5-spiro(3,4-epoxy cyclohexane)-m-dioxane; (3,4-epoxy-6-methylcyclohexyl)methyl 3,4-epoxy-6-methylcyclohexane and 1,2-bis(2,3-epoxycyclopentyl)ethane; dicyclopentadiene diepoxide; and mixtures thereof. Other suitable diepoxides of cycloaliphatic esters of dicarboxylic acids may include those described, for example, in U.S. Patent No. 2,750,395.

Other suitable cycloaliphatic epoxides that may be optionally used in this invention include for example 3,4-epoxycyclohexylmethyl-3,4-epoxycyclohexane carboxylates such as 3,4-epoxycyclohexylmethyl-3,4-epoxycyclohexane carboxylate; 3,4-epoxy-1-methylcyclohexyl-methyl-3,4-epoxy-methylcyclohexane carboxylate, 6-methyl-3,4-epoxycyclohexylmethylmethyl-6-methyl-3,4-epoxycyclohexane carboxylate; 3,4-epoxy-2-methylcyclohexylmethyl-3,4-epoxy-2-methyl cyclohexane carboxylate; 3,4-epoxy-3-methylcyclohexyl-methyl-3,4-epoxy-3-methylcyclohexane carboxylate; 3,4-epoxy-5-methylcyclohexyl-methyl-3,4-epoxy-5-methylcyclohexane carboxylate, di- or polyglycidyl ethers of cycloaliphatic polyols such as 2,2-bis(4-hydroxycyclohexyl) propane; and mixtures thereof Other suitable 3,4-epoxycyclohexylmethyl-3,4-epoxycyclohexane carboxylates useful in this invention may include those described, for example, in U.S. Patent No. 2,890,194.

Suitable commercially available cycloaliphatic epoxy resins optionally used in this invention include for example ERL™4221 (ERL is a trademark of The Dow Chemical Company) available from The Dow Chemical Company. In addition, other cycloaliphatic epoxy resins under the tradename designations ERL, D.E.R. and D.E.N., all available from the Dow Chemical Company may also be used in this invention.

Suitable multi-functional (polyepoxy) epoxy resins optionally used in this invention may include for example resorcinol diglycidyl ether (1,3-bis-(2,3-epoxypropoxy) benzene); triglycidyl p-aminophenol (4-(2,3-epoxypropoxy)-N,N-bis(2,3-epoxypropyl)aniline); triglycidylether of meta- and/or para-aminophenol (such as 3-(2,3-epoxypropoxy)-N,N-bis(2,3-epoxypropyl)aniline); and tetraglycidyl methylene dianiline (N,N,N',N'-tetra(2,3-epoxypropyl) 4,4'-diaminodiphenyl methane); and mixtures of two or more of the above polyepoxy compounds. A more exhaustive list of the additional epoxy resins useful in this invention may be found in Lee, H. and Neville, K., Handbook of Epoxy Resins, McGraw-Hill Book Company, 1982 reissue.

Other suitable additional epoxy resins optionally used in this invention include polyepoxy compounds based on aromatic amines and epichlorohydrin, such as N,N'-diglycidyl-aniline; N,N'-dimethyl-N,N'-diglycidyl-4,4'-diaminodiphenylmethane; N,N,N',N'-tetraglycidyl-4,4'diaminodiphenylmethane; N-diglycidyl-4-aminophenyl glycidyl ether; N,N,N',N'-tetraglycidyl-1,3-propylene bis-4-aminobenzoate; and mixtures thereof Additional epoxy resins may also include glycidyl derivatives of one or more of: aromatic diamines, aromatic monoprimary amines, aminophenols, polyhydric phenols, polyhydric alcohols, polycarboxylic acids; and mixtures thereof

If present, the amount of the additional epoxy resin can be 1 wt % or more, 2 wt % or more, or even 5 wt % or more. At the same time, the amount of the additional epoxy resin can be 35 wt % or less, 30 wt %, or even 25 wt % or less. Wt% of the additional epoxy resin is based on the total epoxy resins in the curable epoxy resin composition.

The curable epoxy resin composition may optionally comprise at least one toughening agent. Toughening agents may include, for example, rubber compounds, block copolymers, polyols, and mixtures thereof.

Examples of toughening agents useful in this invention include amphiphillic block copolymers such as FORTEGRA™ 100 block copolymers available from The Dow Chemical Company (FORTEGRA is a trademark of The Dow Chemical Company); linear polybutadiene-polyacrylonitrile copolymers, oligomeric polysiloxanes, organopolysiloxane resins, carboxyl terminated butadiene, carboxyl terminated butadiene nitrile rubber (CTBN), polysulfide-based toughening agents, amine-terminated butadiene nitrile, polythioethers; and mixtures thereof.

Toughening agents useful in this invention may also include those described in, for example, U.S. Patent Nos. 5,262,507, 7,087,304 and 7,037,958; and U.S. Patent Application Publication Nos. 2005/0031870 and 2006/0205856. Amphiphillic toughening agents useful in this invention may include those disclosed in, for example, PCT Patent Application Publication Nos. WO2006/052725, WO 2006/052726, WO2006/1052727, WO2006/052729, WO2006/052730, and WO2005/1097893, U.S. Patent No. 6,887,574, and U.S. Patent Application Publication No. 2004/0247881.

The toughening agent can comprise a polyol. For example, the polyol may be an aliphatic polyol selected, for example, from linear aliphatic polyols and branched aliphatic polyols. The polyol can comprise any one or combination of more than one of the polyols. Suitable commercially available polyols useful in this invention may include for example VORANOL™ 280 (VORANOL is a trademark of The Dow Chemical Company), VORANOL CP 6001 and VORANOL 8000LM polyols, all available from The Dow Chemical Company, and mixtures thereof. The polyol useful in this invention can have a number average molecular weight of 2,000 or more; 4,000 or more; or even 6,000 or more. At the same time, the polyol can have a number average molecular weight of 20,000 or less, 16,000 or less, or even 15,000 or less.

The toughening agent, if present in the curable epoxy resin composition, may be used in an amount depending on a variety of factors including the desired properties of the products made from the curable epoxy resin composition. For example, the toughening agent used herein can be 0.1 wt % or more, 0.5 wt % or more, or even 1 wt % or more. At the same time, the toughening agent used herein can be 30 wt % or less, 10 wt % or less, or even 5 wt % or less. Wt% of the toughening agent is based on the total weight of the curable epoxy resin composition.

In addition to the anhydride hardeners described above, the curable epoxy resin composition may optionally comprise additional hardeners (or curing agents) for promoting crosslinking of the epoxy resin composition. The additional hardener (or "second hardener") useful in this invention may be used individually or as a mixture of two or more hardeners. The additional hardener may include for example any compound having an active group being reactive with the epoxy group of the epoxy resins.

The additional hardeners useful in this invention may include for example nitrogen-containing compounds such as amines and their derivatives; oxygen-containing compounds such as carboxylic acid terminated polyesters, phenol novolacs, bisphenol-A novolacs, DCPD-phenol condensation products, brominated phenolic oligomers, amino-formaldehyde condensation products, phenol, and bisphenol A and cresol novolacs; phenolic- terminated epoxy resins; sulfur-containing compounds such as polysulfides, and polymercaptans; and mixtures thereof.

Examples of the additional hardeners useful in the invention include for example any catalytic curing materials known to be useful for curing epoxy resin compositions. Suitable catalytic curing agents include for example tertiary amine, quaternary ammonium halide, Lewis acids such as boron trifluoride, and any combination thereof.

The curable epoxy resin compositions for forming the thermoset resin may optionally further contain one or more other additives. For example, the optional additives may include stabilizers, surfactants, flow modifiers, pigments or dyes, matting agents, degassing agents, fillers, flame retardants (for example, inorganic flame retardants such as aluminum trihydroxide, magnesium hydroxide, or boehmite, halogenated flame retardants, and non-halogenated flame retardants such as phosphorus-containing materials), curing initiators, curing inhibitors, wetting agents, colorants or pigments, thermoplastics, processing aids, ultraviolet (UV) blocking compounds, fluorescent compounds, UV stabilizers, antioxidants, impact modifiers including thermoplastic particles, mold release agents and mixtures thereof. Fillers, mold release agents, wetting agents and their combinations may be used in this invention. In general, the amount of the optional additives (if present) in the curable epoxy resin composition should not compromise processability of the epoxy resin composition.

The curable epoxy resin composition can comprise fillers. Examples of suitable fillers useful in this invention include inorganic filler including any one or any combination or more than one of those selected from silica, talc, quartz, mica, zinc peroxide, titanium dioxide and aluminum silicate

If present, the concentration of the inorganic filler can be 0.01 wt % or higher, or even 0.1 wt % or higher. At the same time, the concentration of the inorganic filler can be 30 wt % or lower, 20 wt % or lower, or even 10 wt % or lower. Wt % of the inorganic filler is based on the total weight of the curable epoxy resin composition. At least one average dimension of the inorganic filler particles can be below 10 microns, below 1 micron, or even below 0.5 micron.

To provide satisfactory pultrusion processability, the curable epoxy resin composition in this invention can have a viscosity as determined by ASTM D-2983 at 25°C of 6,000 mPa.s or less; 3,500 mPa.s or less; 3,000 mPa.s or less; 2,500 mPa.s or less; or even 1,750 mPa.s or less.

The reinforcing fiber useful in this invention may be selected from synthetic or natural fibers. The reinforcing fiber may include one or more fibers such as graphite fibers, boron fibers, quartz fibers, aluminum oxide-containing fibers, glass fibers, cellulose fibers, silicon carbide fibers or silicon carbide fibers containing titanium, and mixtures thereof Suitable commercially available fibers useful in this invention may include for example organic fibers such as KEVLAR™ from DuPont (KEVLAR is a trademark of DuPont); aluminum oxide-containing fibers, such as NEXTEL™ fibers from 3M (NEXTEL is a trademark of 3M Company); silicon carbide fibers, such as NICALON™ fibers from Nippon Carbon (NICALON is a trademark of Nippon Carbon Company Ltd.); glass fiber, such as ADVANTEX™ fiber from Owens Corning (ADVANTEX is a trademark of Owens Corning); and silicon carbide fibers containing titanium; and mixtures thereof. The reinforcing fiber preferably comprises inorganic fibers.

The insulating composite of this invention may comprise one single type of reinforcing fiber or combination of two or more different types of reinforcing fibers. The continuous reinforcing fibers useful in this invention may comprise a glass fiber or combination of different types of glass fibers. The type of the glass fibers used herein may include for example E glass, S glass, S-2 glass or C glass, boron free E glass, E-CR glass, and combination thereof. Glass fibers used herein can be selected for example from glass fibers having a tensile strength of at least 1,200 MPa or more, or having a tensile strength within the range of 1,500 MPa to 6,000 MPa. The reinforcing fibers useful for the insulating composite of this invention may be in the forms of, for example, woven fabric, cloth, mesh, web, fiber tows; or in the form of a cross-ply laminate of unidirectionally oriented parallel filaments.

The continuous reinforcing fiber may be preformed into specific microstructures, for example, consisting of axial fibers aligned in the longitudinal direction of the insulating composite as well as twisted fibers braided around the axial fibers with certain helix angle. The continuous reinforcing fibers are desirably axial fibers aligned in the longitudinal direction of the insulating composite.

The insulating composite of this invention can comprise 50 wt % or more, 70 wt % or more, or even 75 wt % or more reinforcing fibers. At the same time, the insulating composite of this invention can comprise 90 wt % or less, 85 wt% or less, or even 85 wt% or less reinforcing fibers. Wt % of the reinforcing fibers is based on total weight of the insulating composite.

The insulating composite of this invention may be formed for example by curing the curable epoxy resin composition with a continuous reinforcing fiber as described above to form a thermoset resin and a continuous reinforcing fiber embedded within the thermoset resin.

A processing technique useful in this invention may include for example a pultrusion process. The process for preparing the insulating composite may comprise the steps of: pulling a continuous reinforcing fiber, contacting the reinforcing fiber with the epoxy resin composition, and curing the epoxy resin composition while being in contact with the continuous reinforcing fiber.

The process for preparing the insulating composite may include for example the steps of: pulling the reinforcing fiber through a curable epoxy resin composition impregnation zone to contact or coat the reinforcing fiber with the curable epoxy resin composition to form resin-impregnated fibers; and then pulling the resin-impregnated fibers through a heated die to cure the curable epoxy resin composition. Optionally, the reinforcing fiber may be pulled through a pre-form plate to shape the fiber/epoxy bundle before reaching the heated die. The impregnation zone used herein may be at a temperature ranging from 25°C to 70°C, or even ranging from 30°C to 60°C. The type of the impregnation zone used herein may vary as long as the zone provides a satisfactory fiber wetting out. The impregnation zone may be a bath or a tank of the curable epoxy resin composition wherein the fibers pass therethrough to wet the fibers with the composition. The reinforcing fibers may be contacted with the curable epoxy resin composition in a closed die (for example, an injection die). Alternatively, the curable epoxy resin composition can be applied to the reinforcing fiber as a high-pressure spray, for example, as described in U.S. Patent Application No. US2011/0104364. Each individual fiber in the mass of reinforcing fibers can be coated with the curable epoxy resin composition.

Curing the curable epoxy resin composition may be carried out, for example, at a temperature of at least 30 °C up to 250 °C, for predetermined periods of time which may be from minutes up to hours, depending on the curable epoxy resin composition, hardener, and catalyst, if used. Curing of the curable epoxy resin composition in this invention may be carried out for example at temperatures in a range from 60 °C to 240 °C, from 100 °C to 230 °C, or even from 120 °C to 220 °C. Curing of the composition may occur at a temperature of at least 100 °C, for predetermined periods of time of from minutes up to hours. Optionally, post-treatments may also be used herein, and such post-treatments may be carried out at temperatures between 100 °C and 250 °C.

Curing the curable epoxy resin composition may be staged to prevent exotherms. Staging, for example, includes curing for a period of time at a temperature followed by curing for a period of time at a higher temperature. Staged curing may include two, three or more curing stages, and may commence at temperatures below 180° C and can be commenced at temperatures below 150° C. A three-stage curing of the curable epoxy resin composition is used.

The pulling speed of the pultrusion process used in this invention may be chosen for example to allow the reinforcing fiber to sufficiently wet out and/or to ensure the curable epoxy resin composition fully cures. The pulling speed can be 200 mm per minute (mm/min) or higher, 300 mm/min or higher, 400 mm/min or higher, or even 600 mm/min or higher. At the same time, the pulling speed can be 1,000 mm/min or lower; 900 mm/min or lower; or even 800 mm/min or lower.

Generally, the insulating composite of this invention may include for example a plurality of reinforcing fibers embedded in the thermoset resin. The insulating composite of this invention may comprise fiber tows embedded in a thermoset resin matrix.

The insulating composite of this invention defines a longitudinal axis, which defines a center of the insulating composite. The reinforcing fibers in the insulating composite may include fibers axially aligned in the longitudinal direction of the insulating composite (that is axial fibers), or combination of axial fibers and twisted fibers braided around the axial fibers with certain helix angle. The reinforcing fibers are desirably axially aligned in the longitudinal direction of the insulating composite. Individual fibers in the reinforcing fibers can be unidirectionally oriented and axially aligned in the longitudinal direction of the insulating composite. The insulating composite may have a constant cross-sectional area over its entire length.

The insulating composite of this invention may have different structures and/or different shapes depending on the applications in which the insulating composite is used. The insulating composite may be in a shape of a rod. The insulating composite may be in a length of 0.2 meter or longer, 0.5 meter or longer, or even one meter or longer. The diameter of the insulating composite may be 130 millimeter (mm) or less, 60 mm or less, or even 40 mm or less.

The insulating composite of this invention may be in a form of a core that further comprises an outer sheathing around the insulating composite core. The outer sheathing can be a rubber coating. Examples of suitable rubber include ethylene-propylene-diene (EPDM) rubber or silicon rubber. An adhesive and/or coupling agent can reside between the insulating composite core and the rubber coating. Generally, process of coating the rubber onto the insulating composite core includes for example injection molding or cold shrink. The injecting molding process may comprise the steps of: injecting rubber to cover the insulating composite core in a mold, vulcanizing the rubber at a temperature (for example, ranging from 120°C to 170°C) for a certain time period and demolding. The insulating composite core may be coated with the adhesives or coupling agents before the injection molding or cold shrink.

The insulating composite of this invention advantageously has (i) a flexural strength at 150°C of at least 300 MPa or higher, 320 MPa or higher, 330 MPa or higher, or even 350 MPa or higher; (ii) a D.C. breakdown voltage of at least 50 kV or more, and (iii) ability to pass dye penetration test at least 15 minutes.

The insulating composite of this invention is useful for power transmission and distribution, for example, overhead electrical transmission lines. The insulating composite may be for example suitable for low-voltage (a nominal voltage from one kV to 10 kV), medium-voltage (a nominal voltage from 10,000 kV to 35,000 kV), or high-voltage (from 35,000 kV to greater than 110,000 kV) power transmission and distribution. The insulating composite of this invention is particularly useful for insulators suitable for power transmission and distribution such as tension tower insulators, suspension tower insulators and post insulators for railways.

### EXAMPLES

The following examples illustrate embodiments of the present invention. All parts and percentages are by weight unless otherwise indicated.

D.E.R.™ 383 resin (D.E.R is a trademark of The Dow Chemical Company) is a diglycidyl ether of bisphenol A, which has an epoxide equivalent weight (EEW) of about 180 and commercially available from The Dow Chemical Company.

D.E.R. 858 resin is a polymer of bisphenol A, epichlorohydrin and methylenediphenylene (which is an oxazolidone ring containing epoxy resin), which has an epoxide equivalent weight (EEW) of about 400, commercially available from The Dow Chemical Company.

D.E.N.™ 438 resin (D.E.N is a trademark of The Dow Chemical Company) is an epoxy novolac resin (a semi-solid reaction product of epichlorohydrin and phenol-formaldehyde novolac), which has an EEW of about 174, available from The Dow Chemical Company.

ERL™ 4221 resin (ERL is a trademark of The Dow Chemical Company) is a cycloaliphatic epoxy resin mixture, having about 85 weight percent 7-oxabicyclo [4.1.0] heptane-3-carboxylic acid and 7-oxabicyclo [4.1.0]hept-3-ylmethylester, the remainder being about 10 weight percent soluble oligomer, and 5 weight percent monoepoxides of 3-cyclohexenylmethyl-3-cyclohexene carboxylate and 3-cyclohexen-1-ylmethyl ester, which has an EEW of about 137, commercially available from The Dow Chemical Company.

VORANOL™ 8000LM polyol (VORANOL is a trademark of The Dow Chemical Company) is a polypropylene glycol, with a molecular weight of 8000 Dalton and a real functionality close to 2, available from The Dow Chemical Company.

Nardic maleic anhydride (NMA) is commercially available from Polynt Chemical Company.

Methyltetrahydrophthalic anhydride (MTHPA) is commercially available from Polynt Chemical Company.

2E4MZ is an imidazole-based latent catalyst, available from BASF Chemical Company.

MOLDWIZ™INT-1890M mold release agent is available from Axel (MOLDWIZ is a trademark of Axel Plastics Research Laboratories, Inc.).

386T glass fiber is an E-type glass fiber available from Jushi.

The following standard analytical equipments and methods are used:

Epoxide equivalent weight (EEW) was determined by using ASTM method D1652. EEW is determined by reacting the epoxides with in-situ produced hydrobromic acid. Hydrobromic acid is generated by the addition of perchloric acid to excess of tetraethyl ammonium bromide. The method is a potentiometric titration, where the potential of the titrated sample is slowly increasing upon the addition of the perchloric acid until hydrobromic acid is consumed by the epoxide. After the completion of the reaction a sudden potential increase occurs and that is indicative of the amount of epoxide present

Viscosity was measured in accordance with ASTM D-2983 at 25°C.

Density was measured in accordance with ASTM-D 792-91.

Water absorption was measured in accordance with ASTM-D 570-81.

Tensile strength was measured in accordance with ASTM-D 638-91 (Test speed: 2 mm/min) at 25°C.

Flexural strength at 25°C was measured in accordance with ASTM-D 638-91 at 25°C.

Dye penetration test was conducted in accordance with DL/T 810-2002.

Water diffusion test was conducted in accordance with DL/T 810-2002.

D.C. breakdown voltage was measured in accordance with DL/T 810-2002.

Hot flexural strength at 150°C was measured in accordance with ASTM-D 638-91 at 150°C.

### Examples 1-3 and Comparative Examples A-C

Insulating composites are prepared by a pultrusion line. Epoxy resin compositions are firstly prepared by mixing ingredients indicated by Table 1, then are added into an open bath. Glass fibers are pulled through the open bath where the fibers are impregnated and wet out by the epoxy resin composition. The resulting fibers impregnated by the epoxy resin composition are pulled through a three-zone heated die with a die diameter of 16 mm. Each heating zone has a length of 300 mm. The temperatures of the three zones are 175°C, 195°C, 205°C, respectively. Fibers are pulled parallel to the longitudinal axis direction of the dies at a pulling speed of 200 mm/min.

The insulating composite obtained is a rod having a diameter of 16 mm and comprises 80 wt % fibers based on total weight of the insulating composite. Properties of the insulating composites are given in Table 2.

**Table 1**

| | Epoxy resin composition Weight parts relative to total epoxy resin composition | | | | | |
|---|---|---|---|---|---|---|
| | Example 1 | Example 2 | Example 3 | Comparative Example A | Comparative Example B | Comparative Example C |
| D.E.R. 858 | 25 | 25 | 17.8 | -- | -- | -- |
| D.E.N. 438 | -- | -- | -- | -- | -- | 25.0 |
| ERL 4221 | -- | -- | 5.0 | -- | -- | -- |
| D.E.R. 383 | 75.0 | 75.0 | 71.0 | 100 | 100 | 75.0 |
| VORANOL8 000LM | 10.0 | -- | 6.2 | -- | -- | -- |
| MTHPA | 67.6 | 67.6 | 71.0 | 85.0 | 45 | 90.4 |
| NMA | -- | -- | -- | -- | 45 | - |
| 2E4MZ | 2.0 | 2.0 | 2.0 | 2.0 | 2.0 | 2.0 |
| INT 1890M | 2.0 | 2.0 | 2.0 | 2.0 | 2.0 | 2.0 |
| Equivalent ratio of epoxy to hardener | 1:0.9 | 1:0.9 | 1:0.9 | 1:0.9 | 1:0.9 | 1:0.9 |
| Viscosity (mPa.s) | 3,500 | 3,500 | 1,000 - 2,000 | 500 - 1,000 | 800 - 1,500 | 1,000 - 2,000 |

As shown in Table 2, insulating composites of Examples 1-3 and insulating composites of Comparative Examples A-C can meet the industrial requirements of tensile strength at 25°C and flexural strength at 25°C.

All insulating composites of this invention (Examples 1-3) achieve a hot flexural strength of at 150°C of at least 300MPa, at the same time, a D.C breakdown voltage of at least 50 kV and pass the dye penetration test. In contrast, the insulating composite of Comparative Example A provides the desired D.C. breakdown voltage and dye penetration performance, but only shows a hot flexural strength at 150°C of 200-250 MPa. The insulating composites of Comparative Example B and C achieve the desired hot flexural strength at 150°C but fail to provide the desired D.C. break down strength and dye penetration performance.

**Table 2**

| **Properties** | Example 1 | Example 2 | Example 3 | Comparative Example A | Comparative Example B | Comparative Example C | Industrial Standard |
|---|---|---|---|---|---|---|---|
| Density, g/cm³ | 2.16 | 2.16 | 2.16 | 2.15 | 2.15 | 2.15 | ≥ 2.15 |
| Water absorption, % | ≤ 0.5 | ≤ 0.5 | ≤ 0.5 | ≤ 0.5 | ≤ 0.5 | ≤ 0.5 | ≤ 0.5 |
| Tensile strength at 25°C, MPa | 1300 | 1500 | 1450 | 1200 | 1200 | 1300 | ≥1200 |
| Flexural strength at 25°C, MPa | 1200 | 1400 | 1350 | 1100 | 1100 | 1150 | ≥1100 |
| Dye penetration test, minute | > 15 | > 15 | > 15 | > 15 | < 15 | < 15 | ≥ 15 |
| Water diffusion test, mA | ≤ 0.5 | ≤ 0.5 | ≤ 0.5 | ≤ 0.5 | ≤ 0.5 | 0.5 | ≤ 0.5 |
| D.C. breakdown voltage, kV | ≥ 50 | ≥ 50 | ≥ 50 | ≥ 50 | 45 | 45 | ≥ 50 |
| Hot flexural strength at 150°C, MPa | 300-350 | 300-350 | 350-400 | 200-250 | 300-350 | 300-350 | ≥300 |

## Claims

1. An insulating composite for power transmission and distribution comprising a continuous reinforcing fiber embedded in a thermoset resin, wherein the thermoset resin is a reaction product of a curable epoxy resin composition comprising (a) at least one bisphenol A-type epoxy resin, (b) at least one oxazolidone ring containing epoxy resin, and (c) at least one anhydride hardener and wherein the curable epoxy resin composition has a viscosity of 6,000 Millipascals.second or less at 25°C (as measured by ASTM D-2983), wherein the insulating composite has a hot flexural strength at 150°C of 300MPa or higher (as measured by ASTM-D 638-91) and a D.C. breakdown voltage of 50 kV or higher (in accordance with DL/T 810-2002), and passes dye penetration test at least 15 minutes (in accordance with DL/T 810-2002).

2. The insulating composite of Claim 1, wherein the bisphenol A-type epoxy resin is diglycidyl ether of bisphenol A.

3. The insulating composite of any previous claim, wherein the oxazolidone ring containing epoxy resin is a reaction product of an aromatic epoxy resin and an isocyanate compound.

4. The insulating composite of any previous claim, wherein at least one anhydride hardener comprises at least one of methyltetrahydrophthalic anhydride (MTHPA); methyl hexahydrophathalic anhydride (MHHPA); methyl-(endo)-5-norbornene-2,3-dicarboxylic anhydride (METHPA); hexahydrophthalic anhydride (HHPA); tetrahydrophthalic anhydride (THPA); pyromellitic dianhydride; ciscyclopentanetetracarboxylic acid dianhydride; hemimellitic anhydride; trimellitic anhydride; naphthalene-1,8-dicarboxylic acid anhydride; phthalic anhydride; dichloromaleic anhydride; dodecenylsuccinic anhydride; glutaric anhydride; maletic anhydride; succinic anhydride; or mixtures thereof.

5. The insulating composite of any previous claim, wherein the curable epoxy resin composition comprises from 60 to 95 weight percent of the bisphenol A-type epoxy resin and from 5 to 40 weight percent of the oxazolidone ring containing epoxy resin, based on total weight of epoxy resins in the curable epoxy resin composition.

6. The insulating composite of any previous claim, wherein the curable epoxy resin composition further comprises an additional epoxy resin selected from the group consisting of a phenol novolac epoxy resin and a cycloaliphatic epoxy resin.

7. The insulating composite of any previous claim, wherein the curable epoxy resin composition further comprises at least one of a toughening agent, a mold release agent, a catalyst and a filler.

8. The insulating composite of any previous claim, wherein the reinforcing fiber comprises a glass fiber.

9. The insulating composite of any previous claim, wherein the insulating material has from 70 to 85 by weight reinforcing fiber based on total weight of the insulating composite.

10. The insulating composite of any previous claim, wherein the reinforcing fiber is axially aligned in the longitudinal direction of the insulating composite.

11. The insulating composite of any previous claim, wherein the insulating composite is in a shape of a rod.

12. The insulating composite of claim 11 having a length of one meter or more.

13. The insulating composite of any previous claim, wherein the insulating composite is in a form of a core that further comprises an outer sheathing around the insulating composite core.

14. The insulating composite of claim 13, wherein the sheathing is rubber.

15. A pultrusion process for preparing the insulating composite of any of claims 1-14, comprising pulling a continuous reinforcing fiber, contacting the reinforcing fiber with a curable epoxy resin composition and curing the curable epoxy resin composition, wherein the curable epoxy resin composition has a viscosity of 6000 Millipascals.Second or less at 25°C (as measured by ASTM D-2983) and contains (a) at least one bisphenol A-type epoxy resin, (b) at least one oxazolidone ring containing epoxy resin, and (c) at least one anhydride hardener.

## Patentansprüche

1. Ein isolierender Verbundstoff zur Energieübertragung und -verteilung, beinhaltend einen durchgängigen Verstärkerfüllstoff, der in einem Duroplastharz eingebettet ist, wobei das Duroplastharz ein Reaktionsprodukt aus einer aushärtbaren Epoxidharzzusammensetzung ist, die Folgendes beinhaltet: (a) mindestens ein Epoxidharz des Bisphenol A-Typs, (b) mindestens ein oxazolidonringhaltiges Epoxidharz, und (c) mindestens einen Anhydridhärter, und wobei die aushärtbare Epoxidharzzusammensetzung bei 25 °C eine Viskosität von 6 000 Millipascal.Sekunden oder weniger (wie gemessen durch ASTM D-2983) aufweist, wobei der isolierende Verbundstoff eine Heißbiegefestigkeit bei 150 °C von 300 MPa oder höher (wie gemessen durch ASTM-D 638-91) und eine Gleichstrom-Durchschlagspannung von 50 kV oder höher (gemäß DL/T 810-2002) aufweist und den Farbeindringungstest mindestsens 15 Minuten (gemäß DL/T 810-2002) besteht.

2. Isolierender Verbundstoff gemäß Anspruch 1, wobei das Epoxidharz des Bisphenol A-Typs ein Diglycidylether von Bisphenol A ist.

3. Isolierender Verbundstoff gemäß einem der vorhergehenden Ansprüche, wobei das oxazolidonringhaltige Epoxidharz ein Reaktionsprodukt eines aromatischen Epoxidharzes und einer Isocyanatverbindung ist.

4. Isolierender Verbundstoff gemäß einem der vorhergehenden Ansprüche, wobei mindestens ein Anhydridhärter mindestens eines von Methyltetrahydrophthalsäureanhydrid (MTHPA); Methylhexahydrophthalsäureanhydrid (MHHPA); Methyl-(endo)-5-norbornen-2,3-dicarbonsäureanhydrid (METHPA); Hexahydrophthalsäureanhydrid (HHPA); Tetrahydrophthalsäureanhydrid (THPA); Pyromellitsäuredianhydrid; Ciscyclopentantetracarbonsäuredianhydrid; Hemimellitsäureanhydrid; Trimellitsäureanhydrid; Naphthalen-1,8-dicarbonsäureanhydrid; Phthalsäureanhydrid; Dichlormaleinsäureanhydrid; Dodecenylbernsteinsäureanhydrid; Glutarsäureanhydrid; Maleinsäureanhydrid; Bernsteinsäureanhydrid; oder Mischungen davon beinhaltet.

5. Isolierender Verbundstoff gemäß einem der vorhergehenden Ansprüche, wobei die aushärtbare Epoxidharzzusammensetzung von 60 bis 95 Gewichtsprozent des Epoxidharzes des Bisphenol A-Typs und von 5 bis 40 Gewichtsprozent des oxazolidonringhaltigen Epoxidharzes beinhaltet, bezogen auf das Gesamtgewicht der Epoxidharze in der aushärtbaren Epoxidharzzusammensetzung.

6. Isolierender Verbundstoff gemäß einem der vorhergehenden Ansprüche, wobei die aushärtbare Epoxidharzzusammensetzung ferner ein zusätzliches Epoxidharz, ausgewählt aus der Gruppe, bestehend aus einem Phenolnovolakepoxidharz und einem cycloaliphatischen Epoxidharz, beinhaltet.

7. Isolierender Verbundstoff gemäß einem der vorhergehenden Ansprüche, wobei die aushärtbare Epoxidharzzusammensetzung ferner mindestens eines von einem Zähigkeitsvermittler, einem Formtrennmittel, einem Katalysator und einem Füllmaterial beinhaltet.

8. Isolierender Verbundstoff gemäß einem der vorhergehenden Ansprüche, wobei der Verstärkerfüllstoff eine Glasfaser beinhaltet.

9. Isolierender Verbundstoff gemäß einem der vorhergehenden Ansprüche, wobei das isolierende Material, bezogen auf das Gesamtgewicht des isolierenden Verbundstoffs, von 70 bis 85 nach Gewicht Verstärkerfüllstoff aufweist.

10. Isolierender Verbundstoff gemäß einem der vorhergehenden Ansprüche, wobei der Verstärkerfüllstoff in der Längsrichtung des isolierenden Verbundstoffs axial ausgerichtet ist.

11. Isolierender Verbundstoff gemäß einem der vorhergehenden Ansprüche, wobei der isolierende Verbundstoff in der Form eines Stabs vorliegt.

12. Isolierender Verbundstoff gemäß Anspruch 11, der eine Länge von einem Meter oder mehr aufweist.

13. Isolierender Verbundstoff gemäß einem der vorhergehenden Ansprüche, wobei der isolierende Verbundstoff in einer Form eines Kerns vorliegt, der ferner eine äußere Verkleidung um den Kern des isolierenden Verbundstoffs beinhaltet.

14. Isolierender Verbundstoff gemäß Anspruch 13, wobei die Verkleidung Gummi ist.

15. Ein Pultrusionsverfahren zum Herstellen des isolierenden Verbundstoffs gemäß einem der Ansprüche 1-14, beinhaltend das Ziehen eines durchgängigen Verstärkerfüllstoffs, das In-Kontakt-Bringen des Verstärkerfüllstoffs mit einer aushärtbaren Epoxidharzzusammensetzung und das Aushärten der aushärtbaren Epoxidharzzusammensetzung, wobei die aushärtbare Epoxidharzzusammensetzung bei 25°C eine Viskosität von 6 000 Millipascal.Sekunden oder weniger (wie gemessen durch ASTM D-2983) aufweist, und a) mindestens ein Epoxidharz des Bisphenol A-Typs, (b) mindestens ein oxazolidonringhaltiges Epoxidharz, und (c) mindestens einen Anhydridhärter enthält.

## Revendications

1. Un composite isolant pour la transmission et la distribution d'électricité comprenant une fibre de renforcement continue incrustée dans une résine thermodurcie, où la résine thermodurcie est un produit de la réaction d'une composition de résines époxy durcissable comprenant (a) au moins une résine époxy de type bisphénol A, (b) au moins une résine époxy contenant un cycle oxazolidone, et (c) au moins un durcisseur anhydride et où la composition de résines époxy durcissable a une viscosité de 6 000 millipascals.seconde ou moins à 25 °C (telle que mesurée selon l'ASTM D-2983), où le composite isolant a une résistance à la flexion à chaud à 150 °C de 300 MPa ou plus (telle que mesurée selon l'ASTM D-638-91) et une tension de rupture en courant continu de 50 kV ou plus (en conformité avec le DL/T 810-2002), et a réussi le test de pénétration par ressuage d'au moins 15 minutes (en conformité avec le DL/T 810-2002).

2. Le composite isolant de la revendication 1, où la résine époxy de type bisphénol A est de l'éther diglycidylique de bisphénol A.

3. Le composite isolant de n'importe quelle revendication précédente, où la résine époxy contenant un cycle oxazolidone est un produit de la réaction d'une résine époxy aromatique et d'un composé isocyanate.

4. Le composite isolant de n'importe quelle revendication précédente, où au moins un durcisseur anhydride comprend au moins un élément parmi l'anhydride méthyltétrahydrophtalique (MTHPA) ; l'anhydride méthyl hexahydrophathalique (MHHPA) ; l'anhydride méthyl-(endo)-5-norbornène-2,3-dicarboxylique (METHPA) ; l'anhydride hexahydrophtalique (HHPA) ; l'anhydride tétrahydrophtalique (THPA) ; le dianhydride pyroméllitique ; le dianhydride d'acide ciscyclopentanetétracarboxylique ; l'anhydride hémiméllitique ; l'anhydride triméllitique ; l'anhydride d'acide naphtalène-1, 8-dicarboxylique ; l'anhydride phtalique ; l'anhydride dichloromaléïque ; l'anhydride dodécénylsuccinique ; l'anhydride glutarique ; l'anhydride malétique ; l'anhydride succinique ; ou des mélanges de ceux-ci.

5. Le composite isolant de n'importe quelle revendication précédente, où la composition de résines époxy durcissable comprend de 60 à 95 pour cent en poids de la résine époxy de type bisphénol A et de 5 à 40 pour cent en poids de la résine époxy contenant un cycle d'oxazolidone, rapporté au poids total des résines époxy dans la composition de résine époxy durcissable.

6. Le composite isolant de n'importe quelle revendication précédente, où la composition de résines époxy durcissable comprend en outre une résine époxy supplémentaire choisie dans le groupe consistant en une résine époxy novolaque phénolique et une résine époxy cycloaliphatique.

7. Le composite isolant de n'importe quelle revendication précédente, où la composition de résines époxy durcissable comprend en outre au moins un élément parmi un agent de durcissement, un agent de démoulage, un catalyseur et une charge.

8. Le composite isolant de n'importe quelle revendication précédente, où la fibre de renforcement comprend une fibre de verre.

9. Le composite isolant de n'importe quelle revendication précédente, où le matériau isolant a de 70 à 85 en poids de fibre de renforcement rapporté au poids total du composite isolant.

10. Le composite isolant de n'importe quelle revendication précédente, où la fibre de renforcement est alignée axialement dans la direction longitudinale du composite isolant.

11. Le composite isolant de n'importe quelle revendication précédente, où le composite isolant est en forme de tige.

12. Le composite isolant de la revendication 11 ayant une longueur d'un mètre ou plus.

13. Le composite isolant de n'importe quelle revendication précédente, où le composite isolant est sous la forme d'une âme qui comprend en outre une gaine extérieure autour de l'âme en composite isolant.

14. Le composite isolant de la revendication 13, où la gaine est en caoutchouc.

15. Un procédé de pultrusion pour préparer le composite isolant de n'importe lesquelles des revendications 1 à 14, comprenant le tirage d'une fibre de renforcement continu, la mise en contact de la fibre de renforcement avec une composition de résines époxy durcissable et le durcissement de la composition de résines époxy durcissable, où la composition de résines époxy durcissable a une viscosité de 6 000 millipascals.seconde ou moins à 25 °C (telle que mesurée par l'ASTM D-2983) et contient (a) au moins une résine époxy de type bisphénol a, (b) au moins une résine époxy contenant un cycle oxazolidone, et (c) au moins un durcisseur anhydride.
